# EUROPÄISCHE PATENTSCHRIFT

(11) **EP 2 403 711 B1**
(45) Veröffentlichungstag und Bekanntmachung des Hinweises auf die Patenterteilung: **17.04.2013**
(21) Anmeldenummer: 10705819.0
(22) Anmeldetag: 24.02.2010
(51) Int. Cl.: B32B 1/08, B32B 5/02, F16C 13/00

(54) **BAUTEIL UND VERFAHREN ZU SEINER HERSTELLUNG**
COMPONENT AND METHOD FOR THE PRODUCTION THEREOF
ÉLÉMENT ET SON PROCÉDÉ DE FABRICATION

(30) Priorität: 06.03.2009 DE 102009011585
(43) Veröffentlichungstag der Anmeldung: 11.01.2012
(73) Patentinhaber: Frank, Egon, 97531 Theres (DE)
(72) Erfinder: Frank, Egon, 97531 Theres (DE)
(74) Vertreter: Gosdin, Michael
(86) Internationale Anmeldenummer: PCT/EP2010/001127
(87) Internationale Veröffentlichungsnummer: WO 2010/099886

(56) Entgegenhaltungen:
- EP-A1- 0 582 950
- DE-A1- 3 527 912
- DE-U1- 8 406 019
- US-A1- 2008 081 136

## Beschreibung

Die Erfindung betrifft ein Bauteil in Form eines Lagerrings eines Lagers, eines Wälzkörpers eines Wälzlagers oder eines Wälzlagerkäfig mit einer Achse, das aus mindestens zwei Schichten besteht. Des Weiteren betrifft die Erfindung ein Verfahren zur Herstellung eines solchen Bauteils.

In vielen Bereichen werden Bauteile benötigt, die eine hohe Festigkeit bei geringem Gewicht aufweisen sollen. Unter dem Gesichtspunkt eines geringen Gewichts kommt als Material für das Bauteil Kunststoff in Frage. Dieses hat zumeist nicht die benötigte Festigkeit. Daher ist es bekannt, in das Kunststoffmaterial Verstärkungsfasern einzulagern, um die Materialfestigkeit zu erhöhen. Bekannt ist die Verwendung insbesondere von Glasfasern und Kohlenstofffasern. Es ist auch eine Technologie bekannt geworden, nach der lange Verstärkungsfasern um einen Bauteilgrundkörper bei Rotation des Grundkörpers gewickelt werden. Damit können Bauteile hoher Festigkeit hergestellt werden.

Nachteilig ist indes, dass auch steife und feste Bauteile der genannten Art häufig nicht die Festigkeit an ihrer Oberfläche aufweisen, um über lange Betriebszeiten hohen Beanspruchungen zerstörungsfrei ausgesetzt werden zu können.

Diverse Verbundbauteile und Verfahren zu deren Herstellung sind im Stand der Technik beschrieben. Die DE 10 2008 013 203 A1 offenbart einen Ausleger, der ein metallisches Hohlprofil aufweist, das mit einer Verstärkungslage aus einem Faser-Kunststoff-Verbund versehen ist. Die DE 94 21 315 U1 zeigt einen Schichtverbundkörper. In der DE 37 15 894 A1 wird ein kunstharzbeschichtetes Fasergelege auf einen Dorn gewickelt und der Wickelkörper samt Dorn in ein dünnwandiges Metallrohr eingelegt. Ein Umwickeln eines Walzenkörpers mit Kohlenstoffgarn ist in der DE 35 27 912 A1 vorgesehen, wobei auf die Mantelfläche des Walzenkörpers eine Schicht durch Plasmaspritzen aufgetragen wird. Ähnliche sowie weitere Lösungen werden in der DE 84 06 019 U1, in der DE 195 08 193 A1, in der DE 195 09 585 A1, in der CH 688 943 A5, in der DE 42 26 789 A1, in der DE 600 14 787 T2, in der US 5 334 124, in der EP 0 582 950 A1 und in der US 2008/0081136 A1 beschrieben.

Der Erfindung liegt daher die **Aufgabe** zugrunde, ein Bauteil der genannten Art so fortzubilden und für dessen Herstellung ein wirtschaftliches Verfahren vorzuschlagen, so dass es möglich ist, das Bauteil unter hoher Belastung einzusetzen und dennoch ein geringes spezifisches Gewicht des Bauteils sicherzustellen.

Die **Lösung** dieser Aufgabe durch Erfindung zeichnet sich dadurch aus, dass das Bauteil eine Achse aufweist und aus mindestens einer ersten Schicht in Form eines röhrenförmigen Körpers und mindestens einer zweiten Schicht besteht, die außerhalb und/oder innerhalb des röhrenförmigen Körpers angeordnet und fest mit der ersten Schicht verbunden ist, wobei die erste Schicht aus einem Verbundmaterial besteht, wobei die zweite Schicht aus einem Hartmaterial besteht, wobei die erste Schicht aus Verbundmaterial einen Kunststoff in Form eines Duroplasts als Grundmaterial aufweist, in den mindestens ein Verstärkungselement eingelagert ist, wobei das mindestens eine Verstärkungselement als lange Glasfaser, Kohlenstofffaser oder Aramidfaser vorliegt, mit dem ein Kunststoffgrundkörper umwickelt ist, und wobei die zweite Schicht aus einem Hartmaterial in Form von Keramik oder aus einem Hartmaterial in Form eines Duroplast-Hartsystems, bei dem in eine Duroplast-Matrix Metallpulver und/oder Keramikpulver eingelagert ist, oder aus einem Hartmaterial in Form von Metall besteht.

Das Bauteil hat vorzugsweise eine hohlzylindrische Form.

Die zweite Schicht kann dabei auf die erste Schicht mittels eines Plasmabeschichtungsprozesses aufgebracht sein. Sie kann auch als separat gefertigtes Element auf die erste Schicht aufgebracht sein. In diesem Falle sieht eine bevorzugte Lösung vor, dass die zweite Schicht aus einem Band gefertigt ist, das gebogen ist und auf die erste Schicht aufgebracht ist.

Eine Variante sieht vor, dass die erste Schicht und/oder die zweite Schicht aus geschäumtem Material besteht oder dieses zumindest teilweise aufweist.

Die bevorzugte Ausgestaltung des Bauteils sieht vor, dass die erste Schicht radial innen und die zweite Schicht radial außen angeordnet ist. Bei dem Bauteil handelt es sich gemäß einer bevorzugten Verwendung um einen Wälzkörper oder einen Lagerring eines Wälzlagers.

Eine besondere Ausführungsform der Erfindung sieht vor, dass in die erste Schicht ein Zusatzbauteil integriert ist. Bei dem Zusatzteil kann es sich beispielsweise um ein Sensorelement (mit aktiver oder passiver Funktion) oder um einen Dehnmessstreifen handeln.

Das erfindungsgemäße Verfahren zum Herstellen eines Bauteils mit einer Achse, bestehend aus mindestens einer ersten Schicht in Form eines röhrenförmigen Körpers und mindestens einer zweiten Schicht, die außerhalb und/oder innerhalb des röhrenförmigen Körpers angeordnet und fest mit der ersten Schicht verbunden ist, sieht die Verfahrensschritte - vorzugsweise in dieser Reihenfolge - vor:
a) Herstellung des röhrenförmigen Körpers aus einem Duroplast-Grundmaterial, wobei auf das Basismaterial mindestens eine lange Glasfaser, Kohlenstofffaser oder Aramidfaser bei Rotation des Körpers um die Achse aufgewickelt wird;
b) Aufbringen der zweiten Schicht aus einem Hartmaterial auf die innere und/oder äußere Oberfläche des röhrenförmigen Körpers der ersten Schicht, wobei das Hartmaterial Keramikmaterial oder ein Duroplast-Hartsystem, bei dem in eine Duroplast-Matrix Metallpulver und/oder Keramikpulver eingelagert ist, oder Metall ist.

Eine bevorzugte Aufbringung der zweiten Schicht erfolgt durch einen Plasmabeschichtungsprozesses.

Eine vorteilhafte Ausgestaltung des vorgeschlagenen Verfahrens stellt darauf ab, dass die zweite Schicht einem Pyrolysevorgang unterzogen wird, um sie einer Umwandlung zu unterziehen und so ihre Temperaturstabilität zu erhöhen. Durch einen nachträglichen pyrolytischen Umwandlungsprozess ist es insbesondere möglich, einem Faserverbundwerkstoff physikalische Eigenschaften zu verleihen, die es ermöglichen, eine sehr hohe Temperaturbeständigkeit im Hybridwerkstoff zu erzielen.

Wie erwähnt, ist ein bevorzugter Anwendungsfall des vorgeschlagenen Bauteils der Wälzlagerbau und hier insbesondere die Verwendung als Wälzkörper, beispielsweise als Zylinder- oder Kegelrolle, oder als Lagerinnen- oder Außenring (sowohl für Gleit- als auch für Wälzlager). Die Oberfläche des Bauteils ist durch den Einsatz des Hartstoffes verschleißresistent, das Gewicht und insbesondere das spezifische Gewicht des Bauteils ist relativ gering.

Wird das Bauteil als Lagerring eingesetzt, sind die (Gewichts)Vorteile besonderes groß, wenn es sich um ein Großlager handelt.

Das vorgeschlagene Faserverbundteil (erste Schicht) ist also mit einem Verschleißschutz in Form der zweiten Schicht aus Hartstoff versehen. Statt der Dichte von Stahl (7,28 kg/dm³) kann ein Wert für die Dichte zwischen 1,3 bis 2,1 kg/dm³ bei durchaus vergleichbarer Festigkeit erreicht werden. Damit wird nicht nur das Gewicht des Bauteils entsprechend gering, auch die Massenträgheitsmomente fallen entsprechend klein aus. Es ist also eine Gewichtsersparnis von bis zu 80 % des Gewichts eines klassisch gefertigten Bauteils möglich.

Der Wirkungsgrad einer technischen Anlage kann auf diese Weise gegebenenfalls verbessert werden. Auch kann bei der Herstellung gemäß dem erfindungsgemäßen Vorschlag im Verhältnis zu vorbekannten Fertigungsverfahren Energie eingespart werden.

Vorteilhaft ist ferner, dass beim Aufbringen der zweiten Schicht aus Hartstoff beispielswiese durch thermisches Plasmaspritzen Formgenauigkeiten erreicht werden können, die im Bereich von Schleifgenauigkeiten liegen können.

Mit dem erfindungsgemäßen Vorschlag kann in sehr wirtschaftlicher Weise das Bauteil hergestellt werden, insbesondere im Falle eines Wälzkörpers in einem Wälzlager oder eines Lagerinnen- oder -außenrings, aber auch im Falle eines Wälzlagerkäfigs. Die Wirtschaftlichkeit des Erfindungsvorschlags ist dabei besonders bei großen Lagern hoch.

Das Bauteil ist korrosionsbeständig und beständig gegen chemische Einflüsse (Säure). In Abhängigkeit der verwendeten Materialien für die erste und/oder zweite Schicht kann das Bauteil entweder elektrisch isolierend oder elektrisch leitend gemacht werden, je nachdem, welche Funktionalität diesbezüglich angestrebt wird.

Die Auswahl der Materialien für die beiden Schichten bestimmt auch weitere physikalische Eigenschaften des Bauteils, wie beispielsweise die Wärmeausdehnung. Ebenfalls kann das Wärmeleitverhalten entsprechend beeinflusst werden. Gerade in der Anwendung im Lagerbau kann dies zur Optimierung der Lebensdauer genutzt werden. Hier können insbesondere Notlaufeigenschaften, beispielsweise bei Lagerdefekten, verbessert werden.

Vorteilhaft ist der hybride Aufbau des Bauteils durch die Verbindung der beiden Schichten, die jeweils unterschiedliche physikalische Eigenschaften haben können. Dies gilt beispielsweise auch für das Dämpfungsverhalten des Bauteils. Bei entsprechender Auswahl der Schichten kann ein hohes Dämpfungsvermögen erreicht werden.

Vorteilhaft ist auch, dass die aufnehmbare Flächenpressung ein Niveau erreicht, das demjenigen konventioneller Werkstoffe (Leichtmetalle, NE-Metalle oder Stahllegierungen) entspricht.

Der erfindungsgemäße Vorschlag stellt also auf die Herstellung von Faserverbundteilen mit Blick darauf ab, dass mittels der vorgeschlagenen Maßnahmen die Oberflächeneigenschaften verbessert werden (insbesondere Druckfestigkeiten, Verschleißfestigkeiten, tribologische Eigenschaften). Damit können die Vorzüge aus konventionellen Werkstoffen mit Vorzügen neuer Werkstoffe vereint werden, die leichter sind und anisotrope Eigenschaften haben können.

Es können insbesondere Stützringe, Außenringe und Innenringe von Wälz- und Gleitlagern, Käfige von Wälzlager, Hohlwellen (Rohre, Walzen usw.) wirtschaftlich und konstruktiv individuell hergestellt werden.

In der Zeichnung ist ein Ausführungsbeispiel der Erfindung dargestellt. Es zeigen:
- Fig. 1: schematisch einen röhrenförmigen Körper bei seiner Herstellung,
- Fig. 2: schematisch die Aufbringung einer Hartstoffschicht auf den röhrenförmigen Körper und
- Fig. 3: in Achsrichtung betrachtet das hergestellte Bauteil bestehend aus einer ersten und einer zweiten Schicht.

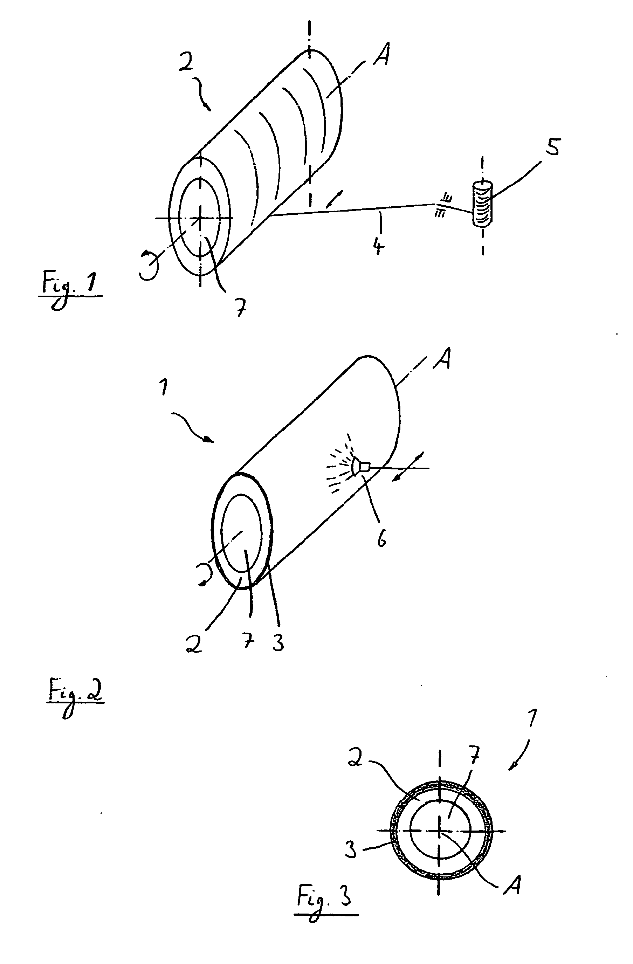

In Fig. 1 ist dargestellt, wie ein röhrenförmiger Körper - hier in Form eines Hohlzylinders - hergestellt wird, der die erste Schicht 2 eines zu fertigenden Bauteils 1 (s. Fig. 3) bildet. Der röhrenförmige Körper besitzt eine Kunststoffmatrix aus einem Thermoplast oder Duroplast, in die ein Verstärkungselement in Form einer Verstärkungsfaser 4 aus Glas oder Kohlenstoff eingelagert wird. Hierzu ist eine Spule 5 vorgesehen, auf der die lange Verstärkungsfaser 4 aufgewickelt ist. Der röhrenförmige Körper rotiert um seine Achse A. Während der Rotation wird die Verstärkungsfaser 4 auf den Umfang des röhrenförmigen Körpers aufgewickelt, was durch den Doppelpfeil in Fig. 1 angedeutet ist.

Der röhrenförmige Körper, d. h. die erste Schicht erhält damit anisotrope Eigenschaften, d. h. die Festigkeit in Umfangsrichtung des Körpers ist höher als in Längsrichtung. Gerade in Umfangsrichtung müssen jedoch zumeist höhere Kräfte aufgenommen werden, wenn das Bauteil rotierend verwendet wird.

Ist die erste Schicht 2 fertig gestellt, erfolgt gemäß Fig. 2 die Aufbringung einer zweiten Schicht 3 in Form eines Hartstoffes. Angedeutet ist in Fig. 2, dass der Hartstoff auf den vorgefertigten röhrenförmigen Körper durch Plasmaspritzen aufgebracht wird, wozu exemplarisch eine Spritzdüse 6 skizziert ist.

Als Hartstoffe kommen alle Materialien in Frage, die eine hohe Oberflächenhärte und Verschleißresistenz aufweisen.

Zur Verbesserung der Haftung der zweiten Schicht 3 auf der ersten Schicht 2 kann ein geeigneter Haftvermittler eingesetzt werden, was als solches bekannt ist.

Das fertige Bauteil 1 ist in Fig. 3 illustriert. Die beiden Schichten 2 und 3 sind koaxial zueinander angeordnet. Das Bauteil 1 weist im Inneren einen Hohlraum 7 auf, was es entsprechend leicht macht. Durch die umwickelten Verstärkungsfasern, die in das Kunststoffmaterial der Basis vollständig eingehüllt angeordnet sein können, hat das Bauteil 1 dennoch eine sehr hohe Festigkeit. die äußere Schicht 3 macht es verschleißstabil und damit lange haltbar.

Bei der Fertigung insbesondere der ersten Schicht 2 können gegebenenfalls Zusatzteile in die Schicht integriert werden, die für den späteren Betrieb des Bauteils benötigt werden. Dies ist allerdings nicht illustriert.

Hinsichtlich der zum Einsatz kommenden Fasern sei noch erwähnt, dass neben den genannten Arten von Fasern auch solche aus Metall, insbesondere aus Stahl, oder Langfaserwerkstoffe zum Einsatz kommen können.

### Bezugszeichenliste:

- 1: Bauteil
- 2: erste Schicht
- 3: zweite Schicht
- 4: Verstärkungsfaser
- 5: Spule
- 6: Sprühkopf
- 7: Hohlraum

- A: Achse

## Patentansprüche

1. Lagerring eines Lagers, Wälzkörper eines Wälzlagers oder Wälzlagerkäfig (1) mit einer Achse (A), bestehend aus mindestens einer ersten Schicht (2) in Form eines röhrenförmigen Körpers und mindestens einer zweiten Schicht (3), die außerhalb und/oder innerhalb des röhrenförmigen Körpers (2) angeordnet und fest mit der ersten Schicht (2) verbunden ist,
wobei die erste Schicht (2) aus einem Verbundmaterial besteht,
wobei die zweite Schicht (3) aus einem Hartmaterial besteht,
wobei die erste Schicht (2) aus Verbundmaterial einen Kunststoff in Form eines Duroplasts als Grundmaterial aufweist, in den mindestens ein Verstärkungselement eingelagert ist,
wobei das mindestens eine Verstärkungselement als lange Glasfaser, Kohlenstofffaser oder Aramidfaser vorliegt, mit dem ein Kunststoffgrundkörper umwickelt ist, und
wobei die zweite Schicht (3) aus einem Hartmaterial in Form von Keramik oder aus einem Hartmaterial in Form eines Duroplast-Hartsystems, bei dem in eine Duroplast-Matrix Metallpulver und/oder Keramikpulver eingelagert ist, oder aus einem Hartmaterial in Form von Metall besteht.

2. Lagerring eines Lagers, Wälzkörper eines Wälzlagers oder Wälzlagerkäfig nach Anspruch 1, **dadurch gekennzeichnet, dass** es eine hohlzylindrische Form aufweist.

3. Lagerring eines Lagers, Wälzkörper eines Wälzlagers oder Wälzlagerkäfig nach Anspruch 1 oder 2, **dadurch gekennzeichnet, dass** die zweite Schicht (3) auf die erste Schicht (2) mittels eines Plasmabeschichtungsprozesses aufgebracht ist.

4. Lagerring eines Lagers, Wälzkörper eines Wälzlagers oder Wälzlagerkäfig nach Anspruch 1 oder 2, **dadurch gekennzeichnet, dass** die zweite Schicht (3) als separat gefertigtes Element auf die erste Schicht (2) aufgebracht ist.

5. Lagerring eines Lagers, Wälzkörper eines Wälzlagers oder Wälzlagerkäfig nach Anspruch 4, **dadurch gekennzeichnet, dass** die zweite Schicht (3) aus einem Band gefertigt ist, das gebogen ist und auf die erste Schicht (2) aufgebracht ist.

6. Lagerring eines Lagers, Wälzkörper eines Wälzlagers oder Wälzlagerkäfig nach einem der Ansprüche 1 bis 5, **dadurch gekennzeichnet, dass** die erste Schicht (2) und/oder die zweite Schicht (3) aus geschäumtem Material besteht oder dieses zumindest teilweise aufweist.

7. Lagerring eines Lagers, Wälzkörper eines Wälzlagers oder Wälzlagerkäfig nach einem der Ansprüche 1 bis 6, **dadurch gekennzeichnet, dass** die erste Schicht (2) radial innen und die zweite Schicht (3) radial außen angeordnet ist.

8. Lagerring eines Lagers, Wälzkörper eines Wälzlagers oder Wälzlagerkäfig nach einem der Ansprüche 1 bis 7, **dadurch gekennzeichnet, dass** in die erste Schicht (2) mindestens ein Zusatzbauteil integriert ist.

9. Lagerring eines Lagers, Wälzkörper eines Wälzlagers oder Wälzlagerkäfig nach Anspruch 8, **dadurch gekennzeichnet, dass** das Zusatzbauteil ein Sensorelement ist.

10. Lagerring eines Lagers, Wälzkörper eines Wälzlagers oder Wälzlagerkäfig nach Anspruch 8, **dadurch gekennzeichnet, dass** das Zusatzbauteil ein Dehnmessstreifen ist.

11. Verfahren zum Herstellen eines Lagerrings eines Lagers, eines Wälzkörpers eines Wälzlagers oder eines Wälzlagerkäfigs (1) mit einer Achse (A), bestehend aus mindestens einer ersten Schicht (2) in Form eines röhrenförmigen Körpers und mindestens einer zweiten Schicht (3), die außerhalb und/oder innerhalb des röhrenförmigen Körpers (2) angeordnet und fest mit der ersten Schicht (2) verbunden ist,
**dadurch gekennzeichnet,**
**dass** das Verfahren die Schritte aufweist:
a) Herstellung des röhrenförmigen Körpers aus einem Duroplast-Grundmaterial, wobei auf das Basismaterial mindestens eine lange Glasfaser, Kohlenstofffaser oder Aramidfaser bei Rotation des Körpers um die Achse (A) aufgewickelt wird;
b) Aufbringen der zweiten Schicht (3) aus einem Hartmaterial auf die innere und/oder äußere Oberfläche des röhrenförmigen Körpers der ersten Schicht (2), wobei das Hartmaterial Keramikmaterial oder ein Duroplast-Hartsystem, bei dem in eine Duroplast-Matrix Metallpulver und/oder Keramikpulver eingelagert ist, oder Metall ist.

12. Verfahren nach Anspruch 11, **dadurch gekennzeichnet, dass** die zweite Schicht (3) auf die erste Schicht (2) durch einen Plasmabeschichtungsprozesses aufgebracht wird.

13. Verfahren nach Anspruch 11, **dadurch gekennzeichnet, dass** die zweite Schicht (3) zunächst als separates Element gefertigt wird und dann auf die erste Schicht (2) aufgebracht wird.

14. Verfahren nach Anspruch 13, **dadurch gekennzeichnet, dass** die zweite Schicht (3) zunächst aus einem Band gefertigt wird, das gebogen wird und anschließend auf die erste Schicht (2) aufgebracht wird.

15. Verfahren nach einem der Ansprüche 11 bis 14, **dadurch gekennzeichnet, dass** die zweite Schicht (3) einem Pyrolysevorgang unterzogen wird, um sie zumindest teilweise einer Umwandlung zu unterziehen und ihre Temperaturstabilität zu erhöhen.

## Claims

1. Bearing ring of a bearing, rolling element of a roller bearing or cage of a roller bearing (1) with an axis (A) consisting of at least a first layer (2) in the form of a tubular body and at least a second layer (3) which is arranged outside and/or inside of the tubular body (2) and which is firmly connected with the first layer (2),
wherein the first layer (2) consists of a composite material,
wherein the second layer (3) consists of a hard material,
wherein the first layer (2) of composite material comprises a plastic material in the form of a thermosetting material as a base material in which plastic material at least one reinforcing element is incorporated,
wherein the at least one reinforcing element is a long glass fibre, carbon fibre, or aramid fibre by which a plastic base body is wrapped, and
wherein the second layer (3) consists of a hard material in the form of ceramics or of a hard material in the form of a thermosetting hard system, in which metal powder and/or ceramic powder is incorporated in a thermosetting matrix, or of a hard material in the form of a metal.

2. Bearing ring of a bearing, rolling element of a roller bearing or cage of a roller bearing according to claim 1, **characterized in that** it has a hollow cylindrical shape.

3. Bearing ring of a bearing, rolling element of a roller bearing or cage of a roller bearing according to claim 1 or 2, **characterized in that** the second layer (3) is deposited on the first layer (2) by means of a plasma coating process.

4. Bearing ring of a bearing, rolling element of a roller bearing or cage of a roller bearing according to claim 1 or 2, **characterized in that** the second layer (3) is a separately produced element which is arranged on the first layer (2).

5. Bearing ring of a bearing, rolling element of a roller bearing or cage of a roller bearing according to claim 4, **characterized in that** the second layer (3) is produced from a strip which is bent and deposited on the first layer (2).

6. Bearing ring of a bearing, rolling element of a roller bearing or cage of a roller bearing according to one of claims 1 to 5, **characterized in that** the first layer (2) and/or the second layer (3) consists of foamed material or comprises at least partially such a material.

7. Bearing ring of a bearing, rolling element of a roller bearing or cage of a roller bearing according to one of claims 1 to 6, **characterized in that** the first layer (2) is arranged radial inwardly and the second layer (3) is arranged radial outwardly.

8. Bearing ring of a bearing, rolling element of a roller bearing or cage of a roller bearing according to one of claims 1 to 7, **characterized in that** at least one ancillary component is integrated into the first layer (2).

9. Bearing ring of a bearing, rolling element of a roller bearing or cage of a roller bearing according to claim 8, **characterized in that** the ancillary component is a sensor element.

10. Bearing ring of a bearing, rolling element of a roller bearing or cage of a roller bearing according to claim 8, **characterized in that** the ancillary component is a strain gauge.

11. Method for the production of a bearing ring of a bearing, rolling element of a roller bearing or cage of a roller bearing (1) with an axis (A) consisting of at least a first layer (2) in the form of a tubular body and at least a second layer (3) which is arranged outside and/or inside of the tubular body (2) and which is firmly connected with the first layer (2),
**characterized in that**
the method comprises the steps of:
a) Production of the tubular body from a thermosetting base material, wherein on the base material at least one long glass fibre, carbon fibre, or aramid fibre is wrapped by rotation of the body around the axis (A);
b) Applying of the second layer (3) from a hard material onto the inner and/or outer surface of the tubular body of the first layer (2), wherein the hard material is ceramic material or a thermosetting hard system, in which metal powder and/or ceramic powder is incorporated in a thermosetting matrix, or metal.

12. Method according to claim 11, **characterized in that** the second layer (3) is applied onto the first layer (2) by means of a plasma coating process.

13. Method according to claim 11, **characterized in that** the second layer (3) is at first produced as a separate element and is then deposited onto the first layer (2).

14. Method according to claim 13, **characterized in that** the second layer (3) is at first produced from a strip which is bent and then deposited on the first layer (2).

15. Method according to one of claims 11 to 14, **characterized in that** the second layer (3) is subjected to a pyrolytic process to subject it at least partially to a transformation for increasing its temperature stability.

## Revendications

1. Bague de palier d'un palier, corps de roulement d'un palier à roulement ou cage de palier à roulement (1) comprenant un axe (A), constitué(e) d'au moins une première couche (2) sous la forme d'un corps tubulaire et d'au moins une deuxième couche (3) qui est disposée à l'extérieur et/ou à l'intérieur du corps tubulaire (2) et qui est reliée fermement à la première couche (2),
la première couche (2) étant constituée d'un matériau composite,
la deuxième couche (3) étant constituée d'un matériau dur,
la première couche (2) en matériau composite comprenant un plastique sous forme d'un duroplaste en tant que matériau de base dans lequel est incorporé au moins un élément de renforcement, l'au moins un élément de renforcement étant présent sous forme de fibre de verre, fibre de carbone ou fibre d'Aramide longue dont est enveloppé un corps de base en plastique et
la deuxième couche (3) étant constituée d'un matériau dur sous forme de céramique ou d'un matériau dur sous forme d'un système dur en duroplaste, dans lequel de la poudre métallique et/ou de la poudre de céramique est incorporée dans une matrice en duroplaste, ou d'un matériau dur sous forme de métal.

2. Bague de palier d'un palier, corps de roulement d'un palier à roulement ou cage de palier à roulement selon la revendication 1, caractérisé(e) en ce qu'il/elle présente une forme cylindrique creuse.

3. Bague de palier d'un palier, corps de roulement d'un palier à roulement ou cage de palier à roulement selon la revendication 1 ou 2, caractérisé(e) en ce que la deuxième couche (3) est appliquée sur la première couche (2) au moyen d'un processus de revêtement par plasma.

4. Bague de palier d'un palier, corps de roulement d'un palier à roulement ou cage de palier à roulement selon la revendication 1 ou 2, caractérisé(e) en ce que la deuxième couche (3) est appliquée sur la première couche (2) en tant qu'élément fabriqué séparément.

5. Bague de palier d'un palier, corps de roulement d'un palier à roulement ou cage de palier à roulement selon la revendication 4, caractérisé(e) en ce que la deuxième couche (3) est fabriquée à partir d'une bande qui est courbée et est appliquée sur la première couche (2).

6. Bague de palier d'un palier, corps de roulement d'un palier à roulement ou cage de palier à roulement selon l'une quelconque des revendications 1 à 5, caractérisé(e) en ce que la première couche (2) et/ou la deuxième couche (3) sont constituées de matériau moussé ou comprennent au moins partiellement celui-ci.

7. Bague de palier d'un palier, corps de roulement d'un palier à roulement ou cage de palier à roulement selon l'une quelconque des revendications 1 à 6, caractérisé(e) en ce que la première couche (2) est disposée radialement à l'intérieur et la deuxième couche (3) est disposée radialement à l'extérieur.

8. Bague de palier d'un palier, corps de roulement d'un palier à roulement ou cage de palier à roulement selon l'une quelconque des revendications 1 à 7, caractérisé(e) en ce qu'au moins un composant supplémentaire est intégré dans la première couche (2).

9. Bague de palier d'un palier, corps de roulement d'un palier à roulement ou cage de palier à roulement selon la revendication 8, caractérisé(e) en ce que le composant supplémentaire est un élément de capteur.

10. Bague de palier d'un palier, corps de roulement d'un palier à roulement ou cage de palier à roulement selon la revendication 8, caractérisé(e) en ce que le composant supplémentaire est une jauge extensométrique.

11. Procédé de fabrication d'une bague de palier d'un palier, d'un corps de roulement d'un palier à roulement ou d'une cage de palier à roulement (1) comprenant un axe (A), constitué(e) d'au moins une première couche (2) sous la forme d'un corps tubulaire et d'au moins une deuxième couche (3) qui est disposée à l'extérieur et/ou à l'intérieur du corps tubulaire (2) et qui est reliée fermement à la première couche (2),
**caractérisé en ce que**
le procédé comprend les étapes suivantes :
a) fabrication du corps tubulaire à partir d'un matériau de base en duroplaste, au moins une fibre de verre, une fibre de carbone ou une fibre d'Aramide longue étant enroulée sur le matériau de base lors de la rotation du corps autour de l'axe (A) ;
b) application de la deuxième couche (3) en un matériau dur sur la surface intérieure et/ou extérieure du corps tubulaire de la première couche (2), le matériau dur étant un matériau céramique ou un système dur en duroplaste dans lequel de la poudre métallique et/ou de la poudre de céramique sont incorporées dans une matrice en duroplaste ou encore un métal.

12. Procédé selon la revendication 11, **caractérisé en ce que** la deuxième couche (3) est appliquée sur la première couche (2) par un processus de revêtement par plasma.

13. Procédé selon la revendication 11, **caractérisé en ce que** la deuxième couche (3) est tout d'abord fabriquée en tant qu'élément séparé et est ensuite appliquée sur la première couche (2).

14. Procédé selon la revendication 13, **caractérisé en ce que** la deuxième couche (3) est tout d'abord fabriquée à partir d'une bande qui est courbée et est ensuite appliquée sur la première couche (2).

15. Procédé selon l'une quelconque des revendications 11 à 14, **caractérisé en ce que** la deuxième couche (3) est soumise à une opération de pyrolyse afin de lui faire subir au moins partiellement une transformation et d'augmenter sa stabilité thermique.
